# EUROPEAN PATENT SPECIFICATION

(11) **EP 0 398 304 B1**
(45) Date of publication and mention of the grant of the patent: **27.07.1994**
(21) Application number: 90109267.6
(22) Date of filing: 16.05.1990
(51) Int. Cl.: C08G 18/48, C08G 18/10, C08J 9/06

(54) **Flexible polyurethane foams and process for preparing them**
Polyurethan-Weichschaumstoffe sowie Verfahren zu deren Herstellung
Mousses souples de polyuréthane et procédé de leur préparation

(30) Priority: 17.05.1989 IT 2054289
(43) Date of publication of application: 22.11.1990
(73) Proprietor: ENICHEM S.p.A., 20124 Milano (IT)
(72) Inventor: Gallo, Bruno, I-30174 Mestre, Venezia (IT); Lunardon, Gianflavio, I-35139 Padova (IT)
(74) Representative: Weinhold, Peter, Dr.

(56) References cited:
- EP-A- 0 022 617
- DE-A- 2 711 735
- GB-A- 2 021 605
- GB-A- 2 107 336
- US-A- 3 862 879

## Description

The present invention relates to flexible polyurethane foams and to processes for preparing them.

More particularly, the present invention relates to flexible polyurethane foams obtained by means of a process which does not require the use of secondary foaming agents of the chlorofluoroalkane type.

The method of producing polyurethane foams is long known. It comprises the reaction of polyether-polyols with polyisocyanates in the presence of catalysts, foaming agents, cell-regulator surfactants, stabilizers and/or further auxiliary products.

The polyether-polyols presently used in order to produce flexible polyurethane foams are prepared by condensing one or more alkylene oxides by means of starters, i.e.,compounds containing at least two activated hydrogen atoms, such as, e.g., glycols, triols, tetrols, amines and mixtures thereof.

The more commonly used alkylene oxides are ethylene and propylene oxide, used either alone or as mixtures. In case a mixture of propylene oxide and ethylene oxide is used, the ethylene oxide content of said mixtures should not exceed 45% by weight, since otherwise both the polyol and the resulting polymer would show too high a surface tension, which would prevent the polyurethane from developing regularly in the presence of the silicone surfactants presently used.

On the other hand, the use of polyethers with a high content of ethylene oxide is necessary if flexible, high-softness polyurethane foams are to be produced (DE-A-2 711 735).

In order to overcome these drawbacks, FR-A-2,129,823 proposes to improve the processability of the polyol having a high content of ethylene oxide (58-77%) by mixing it with another polyol having a low content of ethylene oxide (4-15%).

The resulting system has a sufficiently low surface tension to be suitable for being processed with the customary silicone surfactants.

A disadvantage which affects the process according to the above FR-A is that the use of two polyols which are not miscible with each other is required and, furthermore, that polyols have to be used which contain a large number of primary hydroxy groups, which may imply severe complications in providing a regular and controlled reaction profile.

As a consequence thereof, a suitable balance of the reactions of polymerisation (NCO and OH) and of foaming (NCO and H₂O) cannot be obtained. The balancing usually is carried out, in the continuous-block technology for flexible foams, by means of a couple of catalysts, i.e., a metal-containing catalyst [tin-(II) octanoate, dibutyltin dilaurate, etc.] and an amine catalyst (tertiary amines).

In IT-B-1,858,454 a process is disclosed, according to which only one single free polyether-polyol is used. Therefore, said process does not suffer from the above drawbacks in the production of flexible polyurethane foams.

In particular, in said IT-B there is disclosed a process for preparing flexible polyurethane foams having an extremely high softness, wherein a polyisocyanate is reacted with a hydroxy-compound in the presence of catalysts, foaming agents and still further additives, as generally used in the production of polyurethane foams, in which the hydroxy-compound used is a polyether-polyol containing from 75 to 90% by weight of ethylene oxide and displaying the following characteristics:
(a) a functionality equal to or higher than 2, and preferably of from 3 to 4;
(b) an equivalent weight of from 700 to 2200 per each hydroxy group;
(c) a content of primary hydroxy groups, relative to the total number of hydroxy groups, of from 2 to 35%; and, finally,
(d) a ratio of the content of ethylene oxide to the primary hydroxy groups of from 2.1 to 42.5;
and the polyisocyanate used is the product of the partial polymerization of toluene-diisocyanate with polyether-polyols, said polyisocyanate and said hydroxy-compound - to which foaming agents, etc. are added - being used in amounts such that the ratio NCO/OH in the reaction mixture is higher than or equal to 1, and preferably ranges from 1 to 1.15.

Unfortunately, by means of the process disclosed in IT-B-1,858,454 only polyurethane foams can be obtained whose load-bearing capacity, as measured according to ISO 2439 under a compression of 40%, is very low, typically lower than 50 N, within the range of bulk densities commonly used in this application sector (i.e., of from 15 to 60 kg/cm³). The formulations taken into consideration, when used in combination with the commonly used foaming agents (prevailingly based on chlorofluoroalkanes) do not make it possible to achieve higher load-bearing capacities.

It has now been found that flexible polyurethane foams displaying higher values of the load-bearing capacity than the products of the prior art can be obtained when a foaming agent different from chlorofluoroalkanes, such as carbon dioxide,is used as the only foaming agent.

Therefore, the object of the present invention are flexible polyurethane foams having a a bulk density in the range of from 15 to 33 kg/m³ and a load-bearing capacity of at least 50 N, measured according to ISO 2439 under a compression of 40%, obtainable, in the presence of in situ generated carbon dioxide as the sole blowing agent, through the reaction between a modified polyisocyanate and a compound containing active hydrogen atoms in chain-end position, the modified polyisocyanate having a content of free NCO groups of from 10 to 45% by weight, preferably of from 15 to 40% by weight, and having been obtained by partial polymerization of an organic polyisocyanate with an isocyanate functionality of at least 2, with at least one polyether-polyol having an average molecular weight of from about 1000 to about 8000, preferably of from about 3000 to about 6000, and a hydroxy functionality of from 2 to 4, and the compound containing activated hydrogen atoms in chain-end position comprising at least one polyether-polyol obtained by condensation of a mixture of propylene oxide and ethylene oxide having a content of ethylene oxide of from 30 to 74% by weight, and having:
(a) a hydroxy functionality of from 2 to 4;
(b) an equivalent weight of from about 700 to about 2500 per each hydroxy group in chain-end position; and
(c) a content of primary hydroxy groups in chain-end position, relative to the total number of hydroxy groups, of from 36 to 100%.

According to the present invention,the foaming agent preferably is composed of carbon dioxide alone and the ratio of the equivalents of modified polyisocyanate to the equivalents of the compound containing activated hydrogen atoms in chain-end position ranges from 0.8 to 1.2, particularly from 0.95 to 1.15.

Any organic polyisocyanate capable of yielding polyurethane foams can be used when practicing the present invention, although aromatic diisocyanates, cycloaliphatic diisocyanates, and their corresponding alkyl-substituted derivatives are preferred.

In particular, low-molecular weight diisocyanates of general formula (I):

OCN - R - NCO (I)

wherein R represents an optionally alkyl-substituted cycloaliphatic or aromatic radical of from 5 to 25 (preferably 6 to 20) carbon atoms, such as meta- and/or para-phenylene-diisocyanate, 2,4-toluene-diisocyanate, either alone or in admixture with its 2,6-toluene-diisocyanate isomer; 4,4′-diphenyl-methane-diisocyanate, either alone or in admixture with its 2,4′-diphenyl-methane-diisocyanate isomer; 4,4′-di-cyclohexyl-methane-diisocyanate, 1-isocyanato-3-isocyanato-methyl-3,3,5-trimethyl-cyclohexane (viz., isophorone-diisocyanate), etc. can be used.

The diisocyanate of general formula (I) whose use is preferred is 2,4-toluene-diisocyanate, either alone or in admixture with (preferably at least 20% by weight of) its 2,6-toluene-diisocyanate isomer.

A not distilled (crude) toluene-diisocyanate, i.e. a partially purified toluene-diisocyanate withdrawn from any tray of the distillation tower also may commonly be used.

Alternatively or additionally, medium- or high-molecular-weight polyisocyanates with different degrees of condensation can be used, e.g. obtainable by means of the reaction of phosgene with aniline-formaldehyde condensates. These products are composed of mixtures of polymethylene-polyphenyl-polyisocyanates having the general formula (II): 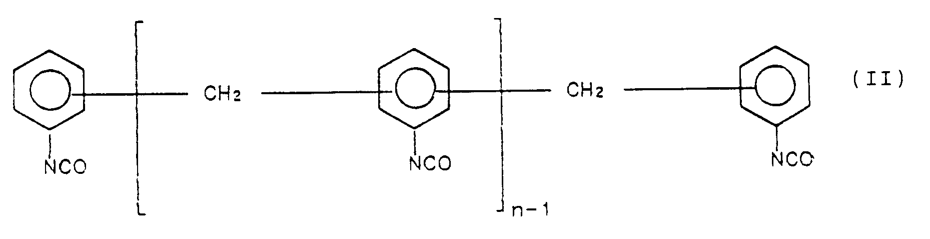
wherein n is an integer greater than or equal to 1.

Preferred medium and high-molecular-weight polyisocyanates are mixtures of polymethylene-polyphenyl-polyisocyanates having an average functionality of from 2.6 to 2.8; such products are available under the tradenames "Tedimon®31" (Montedipe), "Suprasec®DNR" (I.C.I.) and "Desmodur®44 V 20" (Bayer).

The compounds which contain activated hydrogen atoms in chain-end position, to be used in the preparation of the polyurethane foams according to the present invention, preferably are composed of mixtures of water and polyols obtained by condensation of mixtures of propylene oxide and ethylene oxide, by operating in a manner such that the polyol obtained has a total content of ethylene oxide derived units within the range of from 30 to 74% by weight.

The condensation may be carried out with the use of compounds ("starter" compounds) which contain at least two active hydrogen atoms, such as glycols, triols, tetrols, etc., amines, alkanolamines and polyamines, or mixtures thereof.

The sequence of ethylene oxide and propylene oxide derived units along the polymer chain of the polyol is not critical for the purposes of the present invention, and it can hence be of the random type, the block type, or the mixed type.

Representative examples of polyether-polyols suitable for use according to the present invention as compound containing activated hydrogen atoms are those capped partially with propylene oxide and with ethylene oxide and wherein the starter is a glycol, such as dipropyleneglycol, a triol, such as glycerol or trimethylolpropane, a tetrol, such as pentaerythritol, a diamine, such as ethylene-diamine, an alkanolamine, such as triethanolamine, etc., or a mixture of two or more of the above compounds.

Similarily, the polyether-polyols used in the preparation of the modified polyisocyanate to be used in the preparation of the foams according to the present invention may be obtained by polycondensation of (C₂-C₆)-alkylene oxides with a starter selected from the above compounds.

Both the polyether-polyols used in the compounds containing activated hydrogen atoms in chain-end position and the polyether-polyols used in the preparation of the modified polyisocyanates can be obtained by means of processes well-known to those skilled in the art and described, e.g., by Saunders and Frisch in "Polyurethanes, Chemistry and Technology", Interscience, New York 1964.

In the manufacture of the polyurethane foams according to the present invention, the amount of water which can be used in the compound containing activated hydrogen atoms in chain-end position is of relevance in that through water the release of carbon dioxide occurs, which causes the foaming of the polyurethane resin to take place. Amounts of water within the range of from 2.4 to 5.5 parts by weight per 67.5 parts of polyol contained in said compound are most commonly used.

Therefore, according to the present invention, as the foaming agent for causing the foaming of the polyurethane resin to take place, carbon dioxide developed in situ owing to the chemical reaction between water and the free NCO groups of the modified polyisocyanate is preferably used.

The flexible polyurethane foams according to the instant invention can be obtained by means of a process which comprises the following two steps:
(a) a polyisocyanate of general formula (I) and/or (II) is reacted with at least one polyether-polyol having an average molecular weight of from about 1000 to about 8000, preferably of from about 3000 to about 6000, and having a hydroxyl functionality of from 2 to 4, in an amount such that a modified polyisocyanate is obtained which contains from 10 to 45% by weight, preferably from 15 to 40% by weight, of free NCO groups; and
(b) the thus obtained modified polyisocyanate is reacted with a compound containing activated hydrogen atoms in chain-end position, said compound comprising at least one polyether-polyol obtained through condensation of mixtures of propylene oxide and ethylene oxide having a content of ethylene oxide of from 30 to 74% by weight, and having:
   i) a hydroxy functionality of from 2 to 4;
   ii) an equivalent weight of from about 700 to about 2500 per each hydroxy group in chain-end position; and
   iii) a content of primary chain-end hydroxy groups, relative to the total number of hydroxy groups of from 36 to 100%;
and wherein in situ generated carbon dioxide is used as the foaming agent.

The reactions of steps (a) and (b) are generally carried out at room temperature and in the presence of amine catalysts, such as triethylene-diamine, and/or of metal-containing catalysts, such as stannous octanoate, and of other additives, such as cell regulators, stabilizers against thermal oxidation, pigments, etc.

The flexible polyurethane foams according to the present invention preferably have bulk densities of from 15 to 33 kg/cm³ and a load-bearing capacity of at least 50 N, generally of from 50 to 150 N, measured according to ISO 2439 under a compression of 40%. Therefore, on the one hand they are endowed with charactistics such as to meet the requirements of the industrial fields of furniture, interior decorations, cars, etc; and, on the other hand, they can be produced without having to recur to foaming agents such as chlorofluorocarbons, which represent environmental risks.

The following examples are given to illustrate the present invention.

Unless otherwise indicated, the amounts of the various components of the formulations are expressed as parts by weight.

### Example 1

A modified polyisocyanate having a content of about 27% of free NCO groups was prepared by reacting 57.3 parts of toluene-diisocyanate (ratio of the 2,4-isomer to the 2,6-isomer: 80/20) with 42.7 parts of a trifunctional polyether-polyol obtained by polycondensation on glycerol of ethylene oxide (A) and propylene oxide (B) in ratios of (A)/(B) of 20/80.

The polyether had an average molecular weight of about 6000 and an OH number of 28. 50.8 parts of the thus obtained modified polyisocyanate were reacted with 2.4 parts of water and 67.5 parts of a trifunctional polyether-polyol obtained as follows:
By random condensation on glycerol of a mixture consisting of 65% of ethylene oxide and 35% of propylene oxide, a polyether-polyol with a hydroxy functionality of 3, an average molecular weight of about 4000, a hydroxy number of 42 and a content of primary chain-end OH groups of about 50% was obtained.

The mixture of modified polyisocyanate plus polyetherpolyol/water was reacted according to known techniques in the presence of a catalyst consisting of triethylene-diamine and stannous octanoate, and a silicone surfactant, was stirred for a very short time and was then used to prepare flexible foamed materials having a bulk density of about 32 g/litre and a load-bearing capacity, under a compression of 40% according to ISO 2439, of about 60 N.

### Example 2

A modified polyisocyanate having a content of about 31% of free NCO groups was prepared by reacting 66.6 parts of toluene-diisocyanate with 33.4 parts of the same polyol as in Example 1.

59.0 parts of the thus obtained modified polyisocyanate were reacted with 3.4 parts of water and 67.5 parts of the same trifunctional polyether-polyol as in Example 1.

Flexible foamed materials were obtained which had a bulk density of about 25 g/litre and a load-bearing capacity, under a compression of 40% according to ISO 2439, of about 85 N.

### Example 3

A modified polyisocyanate having a content of about 35% of free NCO groups was prepared by reacting 75 parts of toluene-diisocyanate with 25 parts of the same polyol as in Example 1.

64.9 parts of the thus obtained modified polyisocyanate were reacted with 4.4 parts of water and 67.5 parts of the same trifunctional polyether-polyol as in Example 1.

Flexible foamed materials were obtained which had a bulk density of about 20 g/litre and a load-bearing capacity, under a compression of 40% according to ISO 2439, of about 100 N.

### Example 4

A modified polyisocyanate having a content of about 27% of free NCO groups was prepared by reacting 58.2 parts of toluene-diisocyanate with 12.5 parts of the same polyether-polyol as in Example 1 and with a further 29.3 parts of another trifunctional polyether-polyol obtained by means of the polycondensation on glycerol of ethylene oxide (A) and propylene oxide (B) in a ratio of (A)/(B) of 15/85.

The latter polyether had an average molecular weight of about 4000 and a hydroxy number of 42.

50.8 parts of the thus obtained modified polyisocyanate were reacted with 2.4 parts of water and 67.5 parts of the same trifunctional polyether-polyol as in Example 1, besides the usual additives.

Flexible foamed materials were obtained which had a bulk density of about 33 g/litre and a load-bearing capacity, under a compression of 40% according to ISO 2439, of about 120 N.

## Claims

1. Flexible polyurethane foams having a bulk density in the range of from 15 to 33 kg/m³ and a load-bearing capacity of at least 50 N, according to ISO 2439 under a compression of 40%, obtainable, in the presence of in situ generated carbon dioxide as the only blowing agent, by reacting a modified polyisocyanate and a compound containing terminal activated hydrogen atoms, the modified polyisocyanate having a content of free NCO groups of from 10 to 45% by weight and having been obtained by partial polymerization of at least one organic polyisocyanate having an isocyanate functionality of at least 2 with at least one polyether-polyol having an average molecular weight of from about 1000 to about 8000 and a hydroxy functionality of from 2 to 4, and the compound containing terminal activated hydrogen atoms comprising at least one polyether-polyol obtained through condensation of a mixture of propylene oxide and ethylene oxide with a content of ethylene oxide of from 30 to 74% by weight and having:
(a) a hydroxy functionality of from 2 to 4;
(b) an equivalent weight of from about 700 to about 2500 per each terminal hydroxy group; and
(c) a content or primary terminal hydroxy groups, relative to the total number of hydroxy groups, of from 36 to 100%.

2. Polyurethane foams according to claim 1, wherein the ratio of equivalents of modified polyisocyanate to equivalents of compound containing terminal activated hydrogen atoms ranges from 0.8 to 1.2.

3. Polyurethane foams according to any one of claims 1 and 2, wherein the organic polyisocyanate is selected from diisocyanates of general formula (I):
OCN - R - NCO (I)
wherein R represents an optionally alkyl-substituted cycloaliphatic or aromatic radical of from 5 to 25 carbon atoms and mixtures of said diisocyanates; and/or medium-or high-molecular-weight polyisocyanates with different degrees of condensation, obtainable by reaction of phosgene with aniline-formaldehyde condensates and composed of mixtures of polymethylene-polyphenyl-polyisocyanates having the general formula (II): 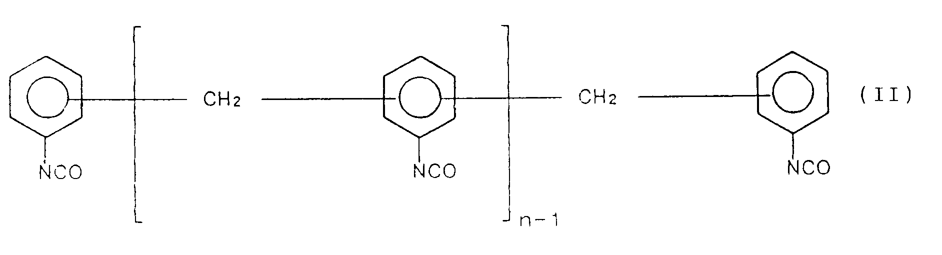 wherein n is an integer of at least 1.

4. Polyurethane foams according to claim 3, wherein the organic polyisocyanate is 2,4-toluene-diisocyanate, either alone or in admixture with at least 20% by weight of its 2,6-toluene-diisocyanate isomer.

5. Polyurethane foams according to any one of the preceding claims, wherein the activated hydrogen atoms containing compound is composed of mixtures of water and polyols obtained by condensation of mixtures of propylene oxide and ethylene oxide with starter compounds containing at least two active hydrogen atoms.

6. Polyurethane foams according to claim 5, wherein the amount of water ranges from 2.4 to 5.5 parts by weight per 67.5 parts of polyol.

7. Polyurethane foams according to any one of the preceding claims, wherein the polyether-polyols used in the preparation of the modified polyisocyanate are derived from the polycondensation of (C₂-C₆)-alkene oxides with compounds containing at least two active hydrogen atoms.

8. Process for preparing the polyurethane foams according to any one of claims 1 to 7, comprising the following steps:
(a) reaction of a polyisocyanate of general formula (I) and/or (II) with at least one polyether-polyol having an average molecular weight of from about 1000 to about 8000 and a hydroxy functionality of from 2 to 4, in an amount such that a modified polyisocyanate is obtained which contains from 10 to 45% by weight of free NCO groups; and
(b) reaction of the thus obtained modified polyisocyanate with a compound containing terminal activated hydrogen atoms, said compound comprising at least one polyether-polyol obtained by condensation of mixtures of propylene oxide and ethylene oxide having a content of ethylene oxide of from 30 to 74% by weight and having:
i) a hydroxy functionality of from 2 to 4;
ii) an equivalent weight of from about 700 to about 2500 per each hydroxy group in chain-end position; and
iii) a content of primary hydroxy groups in chain-end position, relative to the total number of hydroxy groups, of from 36 to 100%;
and wherein in situ generated carbon dioxide is used as the only blowing agent.

9. Process according to claim 8, wherein steps (a) and (b) are carried out at room temperature and in the presence of amine and/or metal-containing catalysts, cell regulators, thermo-oxidation stabilizers and/or pigments.

10. Use of the polyurethane foams according to any one of claims 1 to 7, or obtainable according to the processes of any one of claims 8 and 9, in the fields of furniture, interior decoration and transportation.

## Patentansprüche

1. Flexible Polyurethan-Schaumstoffe mit einer Schüttdichte im Bereich von 15 bis 33 kg/m³ und einer Tragfähigkeit von wenigstens 50 N (nach ISO 2439 unter einer Verdichtung von 40%), herstellbar in Anwesenheit eines in situ erzeugten Kohlendioxids als einzigem Blähmittel, durch Umsetzung eines modifizierten Polyisocyanats und einer Verbindung mit aktivierten Wasserstoff-Endgruppen, wobei das modifizierte Polyisocyanat einen Gehalt an freien NCO-Gruppen von 10 bis 45 Gew.-% aufweist und erhalten wurde durch Teil-Polymerisation von wenigstens einem organischen Polyisocyanat mit einer Isocyanat-Funktionalität von wenigstens 2 , mit wenigstens einem Polyether-Polyol mit einem durchschnittlichen Molekulargewicht von etwa 1000 bis etwa 8000 und einer Hydroxy-Funktionalität von 2 bis 4, und wobei die Verbindung, die die aktivierten Wasserstoff-Endgruppen enthält, wenigstens ein Polyether-Polyol umfaßt, hergestellt durch Kondensation einer Mischung von Propylenoxid und Ethylenoxid mit einem Ethylenoxidgehalt von 30 bis 74 Gew.-% und mit:
(a) einer Hydroxy-Funktionalität von 2 bis 4,
(b) einem Äquivalentgewicht von etwa 700 bis etwa 2500 auf jede Hydroxy-Endgruppe und
(c) einem Gehalt an primären Hydroxy-Endgruppen, bezogen auf die Gesamtzahl der Hydroxygruppen, von 36 bis 100%.

2. Polyurethan-Schaumstoffe nach Anspruch 1, worin das Äquivalent-Verhältnis von modifiziertem Polyisocyanat zu der die aktivierten endständigen Wasserstoffatome enthaltenden Verbindung zwischen 0,8 und 1,2 beträgt.

3. Polyurethan-Schaumstoffe nach einem der Ansprüche 1 und 2, worin das organische Polyisocyanat ausgewählt wird aus Diisocyanaten der allgemeinen Formel (I):
OCN - R - NCO (I)
worin R eine gegebenenfalls Alkyl-substituierte cycloaliphatische oder aromatische Gruppe mit 5 bis 25 Kohlenstoffatomen bedeutet, und Mischungen der genannten Diisocyanate und/oder Polyisocyanaten mit mittlerem oder hohem Molekulargewicht mit verschiedenen Kondensationsgraden, erhältlich durch Umsetzung von Phosgen mit Anilin-Formaldehyd-Kondensaten und zusammengesetzt aus Mischungen von Polymethylen-Polyphenyl-Polyisocyanaten mit der allgemeinen Formel (II): 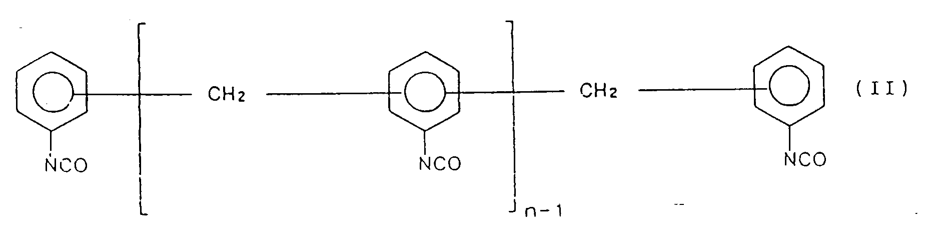 worin n eine ganze Zahl von wenigstens 1 ist.

4. Polyurethan-Schaumstoffe nach Anspruch 3, worin das organische Polyisocyanat ein 2,4-Toluol-diisocyanat ist, entweder allein oder in Mischung mit wenigstens 20 Gew.-% von dessen 2,6-Toluol-diisocyanat-Isomer.

5. Polyurethan-Schaumstoffe nach einem der vorhergehenden Ansprüche, worin die Verbindung mit aktivierten Wasserstoffatomen zusammengesetzt ist aus Mischungen von Wasser und Polyolen, erhalten durch Kondensation von Mischungen von Propylenoxid und Ethylenoxid mit Starterverbindungen, die wenigstens zwei aktive Wasserstoffatome enthalten.

6. Polyurethan-Schaumstoffe nach Anspruch 5, worin die Menge an Wasser im Bereich von 2,4 bis 5,5 Gew.-Teilen pro 67,5 Teile Polyol liegt.

7. Polyuethan-Schaumstoffe nach einem der vorhergehenden Ansprüche, worin die Polyether-Polyole, die bei der Herstellung der modifizierten Polyisocyanate verwendet werden, aus der Polykondensation von (C₂-C₆)-Alkenoxiden mit Verbindungen, die wenigstens zwei aktive Wasserstoffatome enthalten, stammen.

8. Verfahren zur Herstellung der Polyurethan-Schaumstoffe nach einem der Ansprüche 1 bis 7, das die folgenden Schritte umfaßt:
(a) Umsetzung eines Polyisocyanats der allgemeinen Formel (I) und/oder (II) mit wenigstens einem Polyether-Polyol mit einem durchschnittlichen Molekulargewicht von etwa 1000 bis etwa 8000 und einer Hydroxy-Funktionalität von 2 bis 4 in einer solchen Menge, daß ein modifiziertes Polyisocyanat erhalten wird, das von 10 bis 45 Gew.-% an freien NCO-Gruppen enthält; und
(b) Umsetzung des so erhaltenen modifizierten Polyisocyanats mit einer Verbindung, die aktivierte endständige Wasserstoffatome enthält, wobei diese Verbindung wenigstens ein Polyether-Polyol umfaßt, das durch Kondensation von Mischungen von Propylenoxid und Ethylenoxid mit einem Ethylenoxidgehalt von 30 bis 74 Gew.-% erhalten wurde und die:
i) eine Hydroxy-Funktionalität von 2 bis 4 aufweist,
ii) ein Äquivalentgewicht von etwa 700 bis etwa 2500 auf jede Hydroxygruppe in Ketten-Endposition aufweist und
iii) einen Gehalt an primären Hydroxygruppen in Ketten-Endposition von 36 bis 100%, bezogen auf die Gesamtzahl an Hydroxygruppen, aufweist,
und worin in situ-erzeugtes Kohlendioxid als einziges Blähmittel verwendet wird.

9. Verfahren nach Anspruch 8, worin die Schritte (a) und (b) bei Raumtemperatur und in Anwesenheit von Amin und/oder Metall-haltigen Katalysatoren, Zellsteuerungsmitteln, Thermo-Oxidations-Stabilisatoren und/oder Pigmenten durchgeführt werden.

10. Verwendung der Polyurethan-Schaumstoffe nach einem der Ansprüche 1 bis 7 oder die nach den Verfahren der Ansprüche 8 oder 9 erhältlich sind, auf dem Möbelsektor, dem Gebiet der Innendekoration und dem Transportsektor.

## Revendications

1. Mousses de polyuréthane souples présentant une densité apparente de 15 à 33 kg/m³ et une capacité de support de charge d'au moins 50 N selon la norme ISO 2439 sous une compression de 40%, pouvant être obtenue en présence de dioxyde de carbone produit in situ comme unique agent de gonflant, par réaction d'un polyisocyanate modifié et d'un dérivé contenant des atomes d'hydrogène activés terminaux, le polyisocyanate modifié ayant une teneur en groupe NCO libres comprise entre 10 et 45% en poids et ayant été obtenus par polymérisation partielle d'au moins 1 polyisocyanate organique présentant une fonctionnalité isocyanate au moins égale à 2, avec au moins un polyéther-polyol présentant un poids moléculaire moyen d'environ 1 000 à environ 8 000 et une fonctionnalité hydroxy de 2 à 4, et le dérivé contenant des atomes d'hydrogène terminaux activés comprenant au moins un polyéther-polyol obtenu par condensation d'un mélange d'oxyde de propylène et d'oxyde d'éthylène, la teneur en oxyde d'éthylène étant comprise entre 30 et 74% en poids, et présentant:
(a) une fonctionnalité hydroxy de 2 à 4;
(b) un poids équivalent d'environ 700 à environ 2500 pour chaque groupe d'hydroxy terminal; et
(c) une teneur en groupes hydroxy terminaux primaires, par rapport au nombre total de groupes hydroxy, de 36 à 100%.

2. Mousses de polyuréthane selon la revendication 1 dans lesquels le rapport des équivalents du polyisocyanate modifié aux équivalents du dérivé contenant des atomes d'hydrogène terminaux activés est de 0,8 à 1,2.

3. Mousses de polyuréthane selon la revendication 1 et 2, dans lesquelles le polyisocyanate organique est choisi parmi les diisocyanates de formule générale(I)
OCN - R - NCO (I)
dans laquelle R représente un radical cycloaliphatique ou aromatique éventuellement substitué par des radicaux alkyles, renfermant de 5 à 25 atomes de carbone et les mélanges desdits diisocyanates; et/ou des polyisocyanates de poids moléculaires moyen ou élevé présentant des degrés différents de condensation, pouvant être obtenus par réaction de phosgène avec des condensats aniline-formaldéhyde, et composés de mélanges de polyméthylène-polyphényl-polyisocyanates répondant à la formule générale (II): 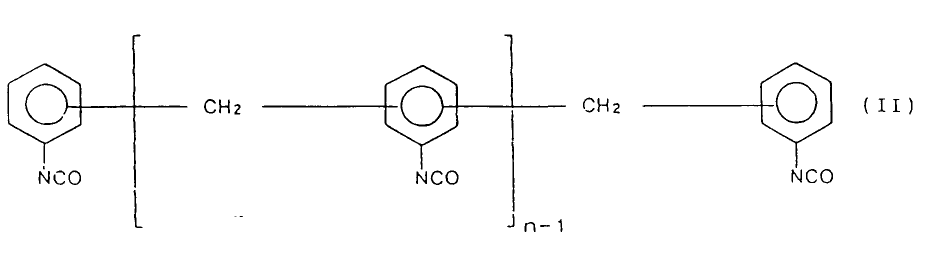 dans laquelle n est un nombre entier au moins égal à 1.

4. Mousses de polyuréthane selon la revendication 3, dans lesquelles le polyisocyanate organique est le 2,4-toluène-diisocyanate, soit seul soit en mélange avec au moins 20 % en poids de son isomère le 2,6-toluène-diisocyanate.

5. Mousses de polyuréthane selon l'une des quelconques revendications précédentes dans lesquelles le dérivé contenant des atomes d'hydrogène activés est composé de mélange d'eau et de polyols obtenus par condensation de mélanges d'oxyde de propylène et d'oxyde d'éthylène avec des dérivés initiateurs contenant au moins 2 atomes d'hydrogène actifs.

6. Mousses de polyuréthane selon la revendication 5, caractérisée en ce que la quantité d'eau est de 2,4 à 5,5 parties en poids pour 67,5 parties de polyols.

7. Mousses de polyuréthane selon l'une quelconque des revendications précédentes, dans lesquelles les polyétherspolyols utilisés dans la préparation du polyisocyanate modifié sont dérivés de la polycondensation d'oxyde d'alkène (C₂ à C₆) avec des dérivés contenant au moins 2 atomes d'hydrogène actifs.

8. Procédé de préparation des mousses de polyuréthane selon l'une quelconque revendication 1 à 7 comprenant les étapes suivantes:
(a) réaction d'un polyisocyanate de formule générale (I) et/ou (II) avec au moins 1 polyéther-polyol dont le poids moléculaire moyen est d'environ 1 000 à environ 8 000 et la fonctionnalité hydroxy est de 2 à 4, en une quantité telle que l'on obtienne un polyisocyanate modifié qui contient de 10 à 45 % en poids de groupes NCO libres, et
(b) réaction du polyisocyanate modifié ainsi obtenu avec un dérivé contenant des atomes d'hydrogène terminaux activés, ce dérivé comprenant au moins 1 polyéther-polyol obtenu par condensation de mélanges d'oxyde de propylène et d'oxyde d'éthylène ayant une teneur en oxyde d'éthylène de 30 à 74% en poids et présentant:
i) une fonctionnalité hydroxy de 2 à 4;
ii) un poids équivalent d'environ 700 à environ 2 500 pour chaque groupe hydroxy situé aux extrémités des chaînes;
iii) une teneur en groupes hydroxy primaires situés aux extrémités des chaînes, par rapport au nombre total de groupes hydroxy, de 36 et 100%;
et dans lequel on utilise du dioxyde de carbone produit in situ comme unique agent gonflant.

9. Procédé selon la revendication 8, dans lequel les étapes (a) et (b) sont mises en oeuvre à la température ambiante et en présence de catalyseurs à base d'amines et/ou contenant des métaux, de régulateurs de cellules, d'agents stabilisant la thermo-oxydation, et/ou de pigments.

10. Utilisation de mousses de polyuréthane selon l'une quelconque des revendications de 1 à 7, ou pouvant être obtenue par les procédés de selon les revendications 8 et 9 dans le domaine de l'ameublement, de la décoration intérieure et du transport.
